# EUROPÄISCHE PATENTANMELDUNG

(11) **EP 4 530 599 A1**
(43) Veröffentlichungstag der Anmeldung: **02.04.2025**
(21) Anmeldenummer: 24202542.7
(22) Anmeldetag: 25.09.2024
(51) Int. Cl.: G01N 1/04, G01N 15/0227, B02C 23/00, B02C 25/00

(54) **INLINE-PARTIKELGRÖSSENANALYSEVORRICHTUNG ZUR KONTINUIERLICHEN MESSUNG VON PARTIKELGRÖSSEN EINER KONTINUIERLICH ENTNOMMENEN MESSPROBE EINES SCHÜTTGUTES, MÜHLE, VERFAHREN ZUR STEUERUNG EINER MÜHLE ZUM VERMAHLEN VON ZU VERMAHLENDEN SCHÜTTGUT IN ABHÄNGIGKEIT VON MESSERGEBNISSEN EINER INLINE-PARTIKELGRÖSSENANALYSEVORRICHTUNG, COMPUTERPROGRAMMPRODUKT UND NICHT-TRANSITORISCHES COMPUTERLESBARES SPEICHERMEDIUM**

(30) Priorität: 26.09.2023 DE 102023126032
(71) Anmelder: Tietjen Verfahrenstechnik GmbH, 25485 Hemdingen (DE)
(72) Erfinder: Eckert, Markus, 25485 Hemdingen (DE)
(74) Vertreter: Eisenführ Speiser

(57) **Zusammenfassung**

Inline-Partikelgrößenanalysevorrichtung (4) zur kontinuierlichen Messung von Partikelgrößen einer kontinuierlich entnommenen Messprobe (3) eines von einer Mühle (1) vermahlenen Schüttgutes (2), insbesondere eines von einer Mühle (1) vermahlenen freifließenden Schüttgutes (2), die Inline-Partikelgrößenanalysevorrichtung (4) aufweisend: eine Hauptleitung (10), eine Nebenleitung (20), sowie eine in dem Nebenleitungskanal (23) bereitgestellte Partikelmessvorrichtung (40), welche zur kontinuierlichen Messung von Partikelgrößen der entnommenen Messprobe (3) ausgebildet ist, mit einem Messprobeneinlass (41) und mit einem stromabwärts der Partikelmessvorrichtung (40) angeordneten und mit der Partikelmessvorrichtung (40) strömungstechnisch verbundenen Messprobenauslass (42), wobei die Messprobenentnahmeeinheit einen verstellbaren Messprobenentnahmeeinlass aufweist, deren Einlassöffnungsgröße zwischen einer ersten Einlassöffnungsgröße und einer von der ersten Einlassöffnungsgröße verschiedenen zweiten Einlassöffnungsgröße einstellbar ist, wobei die zweite Einlassöffnungsgröße größer ist als die erste Einlassöffnungsgröße; Mühle, Verfahren zur Steuerung einer Mühle, Computerprogrammprodukt und nicht-transitorisches computerlesbares Speichermedium.

## Beschreibung

Die Erfindung betrifft eine Inline-Partikelgrößenanalysevorrichtung zur kontinuierlichen Messung von Partikelgrößen einer kontinuierlich entnommenen Messprobe eines Schüttgutes. Ferner betrifft die Erfindung eine Mühle, insbesondere Hammermühle, zum Vermahlen von zu vermahlenden Schüttgut. Weiterhin betrifft die Erfindung ein Verfahren zur Steuerung einer Mühle zum Vermahlen von zu vermahlenden Schüttgut in Abhängigkeit von Messergebnissen einer Inline-Partikelgrößenanalysevorrichtung. Schließlich betrifft die Erfindung ein Computerprogrammprodukt und ein nicht-transitorisches computerlesbares Speichermedium.

Bei der Vermahlung wird üblicherweise zwischen der Trockenvermahlung und der Nassvermahlung unterschieden. (Schütt)Güter, wie zum Beispiel Holz, Stroh & Fasern, sowie die Rohwaren für die Herstellung von Mischfutter, Heimtierfutter, Fischfutter, Getreidereinigung und Lebensmittel können mittels Trockenvermahlung vermahlen werden. Die Herstellung von Alkohol, Ethanol und das Entpacken oder Zerkleinern von Bioabfall (für die Aufbereitung) und für die Herstellung von Silage Desintegration erfolgt in der Regel als Nassvermahlung.

Vor dem Schritt des Vermahlens von (Schütt)Gütern erfolgt üblicherweise ein Dosieren, nachgelagert kann ein Pelletieren und Extrudieren sowie ein Trocknen vorgesehen sein. Je nach Produkt kann anschließend ferner ein Coating der vermahlenen und weiterverarbeiteten Güter und verpacken erforderlich sein.

Es ist bekannt, Proben von Partikeln eines Schüttgutes aus einer Mühle für Analysezwecke zu entnehmen. Die Probenentnahme erfolgt bei/nach den bekannten Mühlen üblicherweise manuell und offline. Hierbei besteht die Gefahr, dass die Entnahme der Probe für das gemahlene Schüttgut nicht repräsentativ ist, da Mischungsparameter der entnommenen Probe nur für einen isolierten Zeitpunkt gelten. Dies hat zur Folge, dass Fehler im Prozess nur verzögert festgestellt werden können. Folglich sind - im Falle eines Fehlers - große Mengen eines bereits vermahlenen Schüttgutes nicht mehr verkäuflich. Dies ist nicht nur aus wirtschaftlichen, sondern insbesondere auch unter Nachhaltigkeitsgesichtspunkten nicht erwünscht.

Hinzu kommt, dass die Ausführung der Probenentnahme außerhalb des Herstellungsprozesses zeitaufwändig und durch den Einfluss des Menschen fehleranfällig ist. Auch dies trägt dazu bei, dass Fehler im Prozess nur verzögert festgestellt werden können, was zu den zuvor genannten Nachteilen führt.

Es ist daher eine Aufgabe der vorliegenden Erfindung, eine Inline-Partikelgrößenanalysevorrichtung zur kontinuierlichen Messung von Partikelgrößen einer kontinuierlich entnommenen Messprobe eines Schüttgutes, eine Mühle, ein Verfahren zur Steuerung einer Mühle zum Vermahlen von zu vermahlenden Schüttgut in Abhängigkeit von Messergebnissen einer Inline-Partikelgrößenanalysevorrichtung, ein Computerprogrammprodukt und ein nicht-transitorisches computerlesbares Speichermedium bereitzustellen, die einen oder mehrere der genannten Nachteile verringern oder beseitigen und/oder gegenüber existierenden Lösungen verbessert sind. Insbesondere ist es eine Aufgabe der vorliegenden Erfindung, eine Inline-Partikelgrößenanalysevorrichtung zur kontinuierlichen Messung von Partikelgrößen einer kontinuierlich entnommenen Messprobe eines Schüttgutes, eine Mühle, ein Verfahren zur Steuerung einer Mühle zum Vermahlen von zu vermahlenden Schüttgut in Abhängigkeit von Messergebnissen einer Inline-Partikelgrößenanalysevorrichtung, ein Computerprogrammprodukt und ein nicht-transitorisches computerlesbares Speichermedium bereitzustellen, welche eine schnellere und verbesserte Fehleridentifikation im Vermahlungsprozess von (Schütt)Gütern ermöglichen. Ergänzend oder alternativ ist es ferner insbesondere eine Aufgabe der vorliegenden Erfindung, eine Inline-Partikelgrößenanalysevorrichtung zur kontinuierlichen Messung von Partikelgrößen einer kontinuierlich entnommenen Messprobe eines Schüttgutes, eine Mühle, ein Verfahren zur Steuerung einer Mühle zum Vermahlen von zu vermahlenden Schüttgut in Abhängigkeit von Messergebnissen einer Inline-Partikelgrößenanalysevorrichtung, ein Computerprogrammprodukt und ein nicht-transitorisches computerlesbares Speichermedium bereitzustellen, welche einen kostengünstigeren Betrieb von Schüttgut verarbeitenden Anlagen, insbesondere von Schüttgut vermahlenden Mühlen, ermöglichen.

Die Erfindung löst die Aufgabe in einem ersten Aspekt gemäß Anspruch 1 durch eine Inline-Partikelgrößenanalysevorrichtung zur kontinuierlichen Messung von Partikelgrößen einer kontinuierlich entnommenen Messprobe eines Schüttgutes. Die Inline-Partikelgrößenanalysevorrichtung ist insbesondere zur kontinuierlichen Messung von Partikelgrößen einer kontinuierlich entnommenen Messprobe eines von einer Mühle vermahlenen Schüttgutes vorgesehen. Ferner ist in bevorzugter Weise die Inline-Partikelgrößenanalysevorrichtung zur kontinuierlichen Messung von Partikelgrößen einer kontinuierlich entnommenen Messprobe eines von einer Mühle vermahlenen freifließenden Schüttgutes vorgesehen.

Freifließendes Schüttgut bedeutet hierbei insbesondere, dass das vermahlene Schüttgut, nachdem es die Mahlkammer der Mühle verlassen hat, zum Beispiel nach einer Zellenradschleuse, einem Elevator-Abwurf oder ähnlichem, aus einem Fallstrom kontinuierlich und gravimetrisch an einer Probenentnahmestelle einer Messprobenentnahmeeinheit vorbeifließt bzw. -fällt. Hierdurch kommt es zu keiner markanten Entmischung oder Kompaktierung der Komponenten der für eine Messung mit einer Partikelmessvorrichtung zu entnehmenden Messprobe, d.h. die Messprobe enthält die Fein- und Grobanteile, die den Anteilen des vermahlenen Schüttgutes entsprechen.

Zur Lösung der Aufgabe gemäß diesem Aspekt weist die Inline-Partikelgrößenanalysevorrichtung auf: eine Hauptleitung, welche eine Hauptleitung-Einlassöffnung und eine Hauptleitung-Auslassöffnung aufweist, welche zum Transport des Schüttgutes über einen Hauptleitungskanal von der Hauptleitung-Einlassöffnung zu der Hauptleitung-Auslassöffnung strömungstechnisch verbunden sind, eine Nebenleitung, welche eine Nebenleitung-Einlassöffnung und eine Nebenleitung-Auslassöffnung aufweist, die zum kontinuierlichen Transport der kontinuierlich gesammelten Messprobe des Schüttgutes über einen Nebenleitungskanal von der Nebenleitung-Einlassöffnung und der Nebenleitung-Auslassöffnung strömungstechnisch verbunden sind, wobei die Nebenleitung zur Förderung der von dem Schüttgut entnommenen Messprobe zu der Nebenleitung über die Nebenleitung-Einlassöffnung mit dem Hauptleitungskanal strömungstechnisch verbunden ist, eine Messprobenentnahmeeinheit, welche ausgebildet ist, kontinuierlich eine Messprobe des in dem Hauptleitungskanal transportierten Schüttgutes zu entnehmen und dem Nebenleitungskanal über die Nebenleitung-Einlassöffnung kontinuierlich bereitzustellen, eine in dem Nebenleitungskanal bereitgestellte Partikelmessvorrichtung, welche zur kontinuierlichen Messung von Partikelgrößen der entnommenen Messprobe ausgebildet ist, mit einem Messprobeneinlass, durch welchen die Messprobe der Partikelmessvorrichtung kontinuierlich zugeführt werden kann, und mit einem stromabwärts der Partikelmessvorrichtung angeordneten und mit der Partikelmessvorrichtung strömungstechnisch verbundenen Messprobenauslass, durch welche die von der Partikelmessvorrichtung erfasste Messprobe im Nebenleitungskanal die Partikelmessvorrichtung in Richtung der Nebenleitung-Auslassöffnung verlassen kann, wobei die Messprobenentnahmeeinheit einen verstellbaren Messprobenentnahmeeinlass aufweist, dessen Einlassöffnungsgröße zwischen einer ersten Einlassöffnungsgröße und einer von der ersten Einlassöffnungsgröße verschiedenen zweiten Einlassöffnungsgröße einstellbar ist, wobei die zweite Einlassöffnungsgröße größer ist als die erste Einlassöffnungsgröße.

Der Messprobenentnahmeeinlass hat insbesondere den Vorteil, dass sich die Messprobenmenge einstellen lässt. Insbesondere lässt sich über die Verstellung der Einlassöffnungsgröße des Messprobenentnahmeeinlasses einstellen, welche Messprobenmenge dem Nebenrohr und damit der Partikelmessvorrichtung zur Messung und Analyse des vermahlenen Schüttgutes zugeführt wird. Durch die Verstellung der Einlassöffnungsgröße des Messprobenentnahmeeinlasses lässt sich insbesondere der Füllgrad der Messprobenentnahmeeinheit, insbesondere der Förderschnecke, mit der Messprobe einstellen. Beispielsweise beträgt der Füllgrad der Messprobenentnahmeeinheit 0%, wenn der Messprobenentnahmeeinlass vollständig geschlossen wird. Der Füllgrad der Messprobenentnahmeeinheit kann 100% betragen, wenn der Messprobenentnahmeeinlass vollständig geöffnet ist. Ein bevorzugter Füllgrad der Messprobenentnahmeeinheit liegt beispielsweise bei 30%.

Die beschriebene Inline-Partikelgrößenanalysevorrichtung ermöglicht insbesondere eine automatisierte Messung und Analyse der Messprobe des vermahlenen Schüttgutes. Hierbei ist vorliegend insbesondere der Vorteil, dass die die Partikelmessvorrichtung und somit die Messung in den bestehenden Prozess fest eingebunden ist und kontinuierliche, reproduzierbare Messergebnisse liefert. Durch den Einsatz von definierten Grenzwerten, können Prozessparameter der Mühle, beispielsweise die Drehzahl eines Rotors und damit die Drehzahl der mit dem Rotor verbundenen Hammermühlenschlägern oder die Aspirationsleistungen der Mühle unmittelbar angepasst werden. Verschleißzustände der Mahlwerkzeuge oder Beschädigungen der Siebeinbauten können ebenso unmittelbar detektiert werden. Der erfindungsgemäße Aufbau der Inline-Partikelgrößenanalysevorrichtung ermöglicht somit eine gleichbleibende Qualität und Quantität des vermahlenen Schüttgutes.

Insbesondere lässt sich durch die automatisierte und kontinuierliche Probenentnahme im Prozess ("inline") die Qualität des vermahlenen Schüttgutes unabhängig vom Maschinenbediener gewährleisten und auch dann gewährleisten, wenn sich externe Einflussfaktoren auf das zu vermahlende Schüttgut verändern.

Insbesondere ermöglicht die erfindungsgemäße Lösung, möglichen Verschleiß an der Mühle, beispielsweise der Hammermühlenschläger, Siebe, und auch Leckagen frühzeitig zu identifizieren. Hierdurch können Wartungsintervalle an den Zustand der Mühle angepasst werden bzw. Wartungsmaßnahmen rechtzeitig ergriffen werden. Somit lassen sich Wartungsarbeiten nicht nur besser bzw. überhaupt vorhersagen, sondern die Wartung der Mühle kann zustandsabhängig erfolgen.

Als Schüttgut kommen beispielsweise Rohstoffe zur Tierfutterherstellung von Haustierfutter, Rinderfutter, Hühnerfutter oder Schweinefutter in Betracht. Rohstoffe sind beispielsweise verschiedene Getreidearten.

Unter den Begriffen "kontinuierlich entnommen und kontinuierlich zugeführt" ist zu verstehen, dass im Betrieb der Inline-Partikelgrößenanalysevorrichtung durchgehend, insbesondere ohne Unterbrechung, dem im Betrieb durch die Hauptleitung strömenden Schüttgut eine Messprobe entnommen wird und diese durchgehend, insbesondere ohne Unterbrechung, der Nebenleitung und somit der Partikelmessvorrichtung zugeführt wird. Unter den Begriffen "kontinuierlich entnommen und kontinuierlich zugeführt" ist insbesondere keine diskrete Entnahme der Messprobe aus dem in der Hauptleitung geführten Schüttgut zu verstehen und insbesondere keine diskrete Zuführung der entnommenen Messprobe zu der Nebenleitung zu verstehen. Insbesondere sind unter den Begriffen "kontinuierlich entnommen und kontinuierlich zugeführt" keine Entnahme und Zuführung der Messprobe mit Unterbrechung zu verstehen. Insbesondere ist beispielsweise unter einer händischen Entnahme einer Messprobe des vermahlenen Schüttgutes einmal pro Stunde oder seltener und deren Analyse in einem Messlabor in einem entsprechenden Takt von einmal pro Stunde oder seltener keine kontinuierliche Entnahme und Analyse der Messprobe zu verstehen. Vorzugsweise ist auch unter einer periodischen Entnahme und Messung einer Messprobe im 15 Sekundentakt keine Entnahme und Analyse der Messprobe zu verstehen.

In Bezug zu der Partikelmessvorrichtung ist unter der Formulierung *"kontinuierlich gemessen"* zu verstehen, dass die Partikelmessvorrichtung im Betrieb durchgehend, insbesondere ohne Unterbrechung, die Partikelgröße der Messprobe erfasst bzw. misst. Vorzugsweise erfolgt auch die Analyse der Messergebnisse im Betrieb durchgehend, insbesondere ohne Unterbrechung.

Hier Hauptleitung ist dazu ausgebildet, größere Mengen Schüttgut zu transportieren. Die Mengen, welche mit der Hauptleitung üblicherweise zu transportieren sind, liegen im Bereich von mehreren Tonnen. Es sind je nach Schüttgut durchaus Transportmengen von bis zu 80 Tonnen die Stunde denkbar, für die die Hauptleitung ausgelegt sein sollte. Entsprechend kann die Hauptleitung einen Durchmesser von mindestens 50 cm, 100 cm, 150 cm oder 200 cm aufweise. Üblicherweise ist der Durchmesser der Hauptleitung kleiner als 500 cm, 400 cm, 300 cm, 200 cm, 150 cm oder 100 cm.

Die Hauptleitung ist vorzugsweise als Rohr, beispielsweise aus Stahl oder Kunststoff, ausgebildet. Es können auch Ausführungsformen bevorzugt sein, in denen die Hauptleitung als Schlauch ausgebildet ist.

Üblicherweise ist die Hauptleitung ausgebildet, um im Vergleich zur Nebenleitung eine wesentlich größere Menge Schüttgut zu transportieren. Vorzugsweise weist die Hauptleitung einen Durchmesser von DN300 auf. Die Nebenleitung ist dazu ausgebildet, Schüttgut in der Größenordnung von 1 dm³ pro Minute zu transportieren. Dies gilt insbesondere bei einem Füllgrad Messprobenentnahmeeinheit von 30 %. Hierzu weist die Nebenleitung üblicherweise einen Durchmesser von DN120 oder DN200 auf. Je nach Menge des vermahlenen Schüttgutes und der gewünschten Menge der Messprobe sind auch davon abweichende Durchmesser denkbar. Die Nebenleitung kann wie die Hauptleitung als Rohr oder aber als Schlauch ausgebildet sein. Vorzugsweise besteht die Nebenleitung aus Stahl und/oder Kunststoff. Die Nebenleitung ist vorzugsweise als eine Art Fallrohr ausgebildet, so dass die Messprobe insbesondere auf Grund der auf die entnommene Messprobe wirkenden Schwerkraft durch die Nebenleitung gefördert wird.

Die Nebenleitung kann als Bypassleitung der Hauptleitung verstanden werden. Der Hauptleitung wird mit der Messprobenentnahmeeinheit kontinuierlich Schüttgut als Messprobe entnommen und der Nebenleitung über die Nebenleitung-Einlassöffnung zugeführt. Auch die Zufuhr der entnommenen Messprobe zu der Nebenleitung erfolgt vorzugsweise über die Messprobenentnahmeeinheit. Hierzu kann die Messprobenentnahmeeinheit beispielsweise als Rutsche ausgebildet sein oder eine Rutsche umfassen, über die das der Hauptleitung zu entnehmende Schüttgut aufgrund von Schwerkraft kontinuierlich der Nebenleitung zugeführt werden kann.

Mit der Messprobenentnahmeeinheit werden der Hauptleitung vorzugsweise in der Größenordnung 1 dm³ pro Minute kontinuierlich entnommen und kontinuierlich der Nebenleitung zugeführt. Dies gilt insbesondere bei einer Füllung von 30 % der Messprobenentnahmeeinheit.

Die Partikelmessvorrichtung ist vorzugsweise zwischen der Nebenleitung-Einlassöffnung und der Nebenleitung-Auslassöffnung in die Nebenleitung integriert. Insbesondere ist die Partikelmessvorrichtung derart angeordnet, dass diese zwischen der Nebenleitung-Einlassöffnung und der Nebenleitung-Auslassöffnung einen Teil der Nebenleitung ausbildet. Die Partikelmessvorrichtung ist zur kontinuierlichen Messung der von der Messprobenentnahmeeinheit entnommenen Messprobe ausgebildet. Insbesondere ist die Partikelmessvorrichtung dazu ausgebildet eine Messprobe in der Größenordnung 1 dm³ pro Minute kontinuierlich zu messen. Besonders bevorzugt ist es, dass die Partikelmessvorrichtung dazu ausgebildet eine Messprobe in der Größenordnung 1 dm³ pro Minute kontinuierlich zu analysieren. Dies gilt insbesondere bei einer Füllung von 30 % Messprobenentnahmeeinheit. Vorzugsweise werden die Messergebnisse und die Analyseergebnisse auf einer Speichereinheit gespeichert. Diese Speichereinheit kann von der Partikelmessvorrichtung umfasst sein. Es kann aber auch bevorzugt sein, dass die Speichereinheit Teil eines Computersystems, beispielsweise eines Servers oder eines Rechners ist.

Zu den Vorteilen, Ausführungsvarianten und Ausführungsdetails dieses Aspektes der Erfindung und ihrer Fortbildungen wird auch auf nachfolgende Beschreibung zu den entsprechenden Merkmalen der Mühle, des Verfahrens, des Computerprogrammprodukts und des nicht-transitorischen computerlesbaren Speichermedium verwiesen.

Gemäß einer bevorzugten Fortbildung der Inline-Partikelgrößenanalysevorrichtung weist die Partikelmessvorrichtung auf: eine innerhalb eines Messkammergehäuses ausgebildete Messkammer, die gegenüber der Umgebung der Inline-Partikelgrößenanalysevorrichtung abgedunkelt ist, einen Strahlungsdetektor, der zur Detektion elektromagnetischer Strahlung ausgebildet ist und insbesondere eine Kamera, besonders bevorzugt eine Infrarotkamera, die den Strahlungsdetektor umfasst, und eine Strahlungsquelle für elektromagnetische Strahlung, wobei die Strahlungsquelle insbesondere eine Infrarotquelle ist und/oder als LED ausgebildet ist, wobei der Strahlungsdetektor und die Lichtquelle in Bezug zur Messkammer zur kontinuierlichen Messung der Messprobe angeordnet sind, wobei der Strahlungsdetektor 403 und die Lichtquelle 404 vorzugsweise gegenüberliegend angeordnet sind.

Ferner ist nach einer bevorzugten Ausführungsform vorgesehen, dass der Strahlungsdetektor ein optischer Matrix-Sensor mit einer Auswerteeinheit ist oder diese umfasst; und/oder die Strahlungsquelle eine Lichtquelle ist, welche zur Ausstrahlung eines gleichförmigen Lichts ausgebildet ist.

Nach einer weiteren bevorzugten Ausführungsform der Inline-Partikelgrößenanalysevorrichtung ist vorgesehen, dass die Kamera den Strahlungsdetektor umfasst und die Kamera mindestens 24 Bilder pro Sekunde, vorzugsweise mindestens 360 Bilder pro Sekunde, besonders bevorzugt mindestens 6.000 Bilder pro Sekunde, aufnimmt und/oder maximal bis zu 6.000 Bilder pro Sekunde, vorzugsweise maximal bis zu 10.000 Bilder pro Sekunde, besonders bevorzugt maximal bis zu 20.000 oder 25.000 Bilder pro Sekunde, aufnimmt. Vorzugsweise nimmt die Kamera 6.000 Bilder pro Sekunde auf.

Die Bilder werden vorzugsweise mittels einer auf einer Analysevorrichtung laufenden Analysesoftware ausgewertet. Vorzugsweise stellt die Partikelmessvorrichtung hierzu im Sekundentakt die Messwerte der Analysesoftware zur Verfügung.

Weiterhin gemäß einer bevorzugten Fortbildung der Inline-Partikelgrößenanalysevorrichtung vorgesehen, dass die Partikelmessvorrichtung zur Messung von Partikelgrößen von mindestens 50 µm, vorzugsweise von mindestens 85 µm, besonders bevorzugt von mindestens 160 µm, ausgebildet ist. Ergänzend oder alternativ ist in dieser bevorzugten Fortbildung der Inline-Partikelgrößenanalysevorrichtung vorgesehen, dass die Partikelmessvorrichtung zur Messung von Partikelgrößen von maximal 20.000 µm, vorzugsweise von maximal 10.000 µm, besonders bevorzugt von maximal 6.000 µm, ausgebildet ist.

Ferner weist in einer bevorzugten Ausführungsform der Inline-Partikelgrößenanalysevorrichtung der Strahlungsdetektor matrixartig angeordnete Detektorpixel auf. In dieser bevorzugten Ausführungsform weisen die Detektorpixel Kantenlängen von mindestens 50 µm * 50 µm, vorzugsweise von mindestens 85 µm * 85 µm, besonders bevorzugt von mindestens 160 µm * 160 µm, auf. Ergänzend oder alternativ weisen die Detektorpixel in dieser bevorzugten Ausführungsform Kantenlängen von maximal 20.000 µm * 20.000 µm, vorzugsweise von maximal 10.000 µm * 10.000 µm, besonders bevorzugt von maximal 6.000 µm * 6.000 µm, auf.

In einer weiteren bevorzugten Fortbildung der Inline-Partikelgrößenanalysevorrichtung weist die Messprobenentnahmeeinheit eine Fördervorrichtung auf, die sich von dem Hauptleitungskanal und zu dem Nebenleitungskanal zur kontinuierlichen Förderung der Messprobe zu dem Nebenkanal erstreckt.

Nach einer weiteren bevorzugten Ausführungsform der Inline-Partikelgrößenanalysevorrichtung ist vorgesehen, dass die Fördervorrichtung einen Förderkanal aufweist, der sich zwischen der Einlassöffnung der Messprobenentnahmeeinheit und einer Abwurföffnung erstreckt, wobei die Fördervorrichtung eine in dem Förderkanal von einer Förderantriebseinheit drehbar antreibbar angeordnete Förderschnecke aufweist, wobei die Förderschnecke vorzugsweise aus Kunststoff besteht oder Kunststoff umfasst, und/oder der Förderkanal vorzugsweise aus Stahl gebildet wird; und/oder einen verstellbaren Förderschneckenboden zur Aufnahme der Messprobe und Zuführung der Messprobe zu der Messprobenentnahmeeinheit aufweist, der zwischen einer ersten Förderschneckenbodenposition und einer von der ersten Förderschneckenbodenposition verschiedenen zweiten Förderschneckenbodenposition einstellbar ist, so dass der Messprobenentnahmeeinlass der ersten Einlassöffnungsgröße entspricht, wenn der Förderschneckenboden in der ersten Förderschneckenbodenposition angeordnet ist und der zweiten Einlassöffnungsgröße entspricht, wenn der Förderschneckenboden in der zweiten Förderschneckenbodenposition angeordnet ist; und/oder die Abwurföffnung als Schlitz ausgebildet ist, wobei die schlitzförmig ausgebildete Abwurföffnung insbesondere dazu ausgebildet ist, die Messprobe gleichmäßig über einen Öffnungsquerschnitt des Nebenleitungskanals zu verteilen.

Die Einlassöffnungsgröße des Messprobenentnahmeeinlasses lässt sich insbesondere dadurch einstellen, dass der Förderschneckenboden der Fördervorrichtung entsprechend verstellt wird. Vorzugsweise ist der Förderschneckenboden der Fördervorrichtung zwischen der ersten Förderschneckenbodenposition und der zweiten Förderschneckenbodenposition kontinuierlich verstellbar. Insbesondere ist bevorzugt, dass die Verstellung des Förderschneckenbodens der Fördervorrichtung zwischen der ersten Förderschneckenbodenposition und der zweiten Förderschneckenbodenposition automatisch, insbesondere mittels einer Verstelleinheit, beispielsweise eines Motors, erfolgt. Vorzugsweise erfolgt die Verstellung der Förderschneckenbodenposition des Förderschneckenbodens zwischen der ersten Förderschneckenbodenposition und der zweiten Förderschneckenbodenposition in Abhängigkeit eines Steuersignals, welches durch eine Steuerungsvorrichtung bereitgestellt werden kann. Es kann auch bevorzugt sein, den Förderschneckenboden zwischen der ersten Förderschneckenbodenposition und der zweiten Förderschneckenbodenposition manuell zu verstellen.

In bevorzugter Weise bildet der Förderschneckenboden einen Teil des Förderschneckenkanals. Insbesondere bildet der Förderschneckenboden den Förderschneckenkanal an dessen Einlassöffnung aus. Vorzugsweise ist der Förderschneckenboden in Axialrichtung entlang der Förderschnecke bzw. in oder entgegen der Förderrichtung der Förderschnecke verfahrbar. Insbesondere ist der Förderschneckenboden derart angeordnet, dass das vermahlene Schüttgut im Betrieb von der Mühle auf den Förderschneckenboden fällt bzw. der Förderschneckenboden das (frei)fallende vermahlene Schüttgut auffängt. Vorzugsweise ist der Förderschneckenboden hierzu als Teilrohrsegment ausgebildet. Es ist in bevorzugter Weise vorgesehen, dass die Menge des vermahlenen Schüttgutes, welches sich in dem Förderschneckenboden als Messprobe sammelt, umso größer ist, je mehr der Förderschneckenboden ausgefahren ist. Insbesondere ist zu verstehen, dass im Wesentlichen kein vermahlenes Schüttgut in dem Förderschneckenboden gesammelt wird, wenn der Förderschneckenboden vollständig eingefahren ist. In diesem letzten Fall spricht man vorzugsweise auch von einer geschlossenen Einlassöffnung, d.h. der Messprobenentnahmeeinlass ist vollständig geschlossen.

Weiterhin weist die Inline-Partikelgrößenanalysevorrichtung in einer bevorzugten Fortbildung eine Messprobenaufbereitungsstrecke auf, welche sich zwischen der Nebenleitung-Einlassöffnung und dem Messprobeneinlass der Partikelmessvorrichtung erstreckt, wobei die Messprobenaufbereitungsstrecke eine Messprobenaufbereitungseinheit und/oder eine Luftreinigungseinheit aufweist.

Nach einer weiteren bevorzugten Fortbildung der Inline-Partikelgrößenanalysevorrichtung weist die Messprobenaufbereitungseinheit eine Messprobenverteilerplatte auf, welche die über die Nebenleitung-Einlassöffnung zugeführte Messprobe in der Messprobenaufbereitungsstrecke verteilt, wobei vorzugsweise die Messprobenverteilerplatte wechselbar und/oder lösbar an der Nebenleitung angeordnet ist. Ergänzend oder alternativ ist vorgesehen, dass die Messprobenaufbereitungseinheit einen Messprobenverteilerrost aufweist, das die über die Nebenleitung-Einlassöffnung zugeführte Messprobe in der Messprobenaufbereitungsstrecke verteilt, wobei der Messprobenverteilerrost vorzugsweise mehrere, insbesondere mehr als zwei, äquidistant zueinander beabstandet angeordnete Verteilerstäbe aufweist, wobei die Verteilerstäbe vorzugsweise als Rundstahl ausgebildet sind; und/oder vorzugsweise die Verteilerstäbe einen Durchmesser von mindestens 5 mm, insbesondere von mindestens 6 mm, besonders bevorzugt von mindestens 10 mm, aufweisen; und/oder vorzugsweise die Verteilerstäbe eine Länge von mindestens 100 mm, besonders bevorzugt von mindestens 120 mm, und maximal von 250 mm, besonders bevorzugt von maximal 205 mm, aufweisen; und/oder vorzugsweise die Verteilerstäbe an oder mit einer Wand der Nebenleitung 20 stoffschlüssig verbunden, insbesondere verschweißt, sind. Ergänzend oder alternativ ist vorgesehen, dass die Messprobenaufbereitungseinheit eine Düseneinheit aufweist, wobei die Düseneinheit vorzugsweise an der Nebenleitung stromaufwärts des Messprobenverteilerrosts und/oder der Messprobenverteilerplatte angeordnet ist.

Vorzugsweise beträgt der Durchmesser der Verteilerstäbe 6 mm und/oder der Abstand zwischen benachbart angeordneten Verteilerstäben beträgt vorzugsweise 6 mm. Mittels der Düseneinheit kann beispielsweise Messprobenverteilerrost und/oder die Messprobenverteilerplatte und/oder die Partikelmessvorrichtung gereinigt werden. Hierzu kann die Düseneinheit mit einem entsprechenden Reinigungssteuersignal angesteuert werden.

Vorzugsweise ist die Messprobenverteilerplatte als Schlitz ausgebildet. Insbesondere ist es vorgesehen, dass die Messprobenverteilerplatte in Förderrichtung der Messprobe unterhalb der Förderschnecke angeordnet ist. Vorzugsweise bildet die Messprobenverteilerplatte die Abwurföffnung des Förderkanals. Insbesondere ist vorgesehen, dass der Messprobenverteilerrost zwischen der Messprobenverteilerplatte und der Partikelmessvorrichtung angeordnet ist.

Diese bevorzugte Anordnung ermöglicht eine besonders gleichmäßige Verteilung der Messprobe als Vorbereitung für die Messung mit der Partikelmessvorrichtung. Insbesondere gewährleistet der Messprobenverteilerrost, dass der Partikelmessvorrichtung mit der Messprobe ein repräsentatives Abbild des vermahlenen Schüttgutes erhält.

Weiterhin weist in einer bevorzugten Fortbildung der Inline-Partikelgrößenanalysevorrichtung die Partikelmessvorrichtung einen Messkammereinlass, durch den die Messprobe der Messkammer kontinuierlich zugeführt werden kann, und einen Messkammerauslass, durch den die Messprobe die Messkammer kontinuierlich verlassen kann, auf.

In einer ferner bevorzugten Ausführungsform der Inline-Partikelgrößenanalysevorrichtung ist die Partikelmessvorrichtung ausgebildet, eine Messung der zugeführten Messprobe durchzuführen, wenn die Menge der Messprobe eine Grenzmenge überschreitet. Hierzu wird die Menge der durch die Partikelmessvorrichtung geführten Partikel der Messprobe in Abhängigkeit einer Größenklasse der Partikel gezählt. Es ist in bevorzugter Weise vorgesehen, dass der Benutzer der Mühle eine Untergrenze und/oder eine Obergrenze für die festlegen kann oder eine Mengengrenze werkseitig festgelegt sein kann.

Weiterhin weist Inline-Partikelgrößenanalysevorrichtung gemäß einer bevorzugten Ausführungsform eine Schmutzdetektionseinheit auf zur Detektion von Verschmutzung in der Partikelmessvorrichtung, insbesondere an dem Strahlungsdetektor und/oder der Strahlungsquelle, wobei besonders bevorzugt der Strahlungsdetektor die Schmutzdetektionseinheit ausbildet oder ist.

Dies erfolgt insbesondere durch das Messen bzw. Erfassen der Abschattung der Messmatrix, wobei ein bestimmter (festzulegender) Grenzwert der Abschattung nicht überschritten werden darf. Wird der Grenzwert überschritten, liegt also eine Verschmutzung vor, welche keine zuverlässige Messung der entnommenen Messprobe ermöglicht, kann beispielsweise ein Alarmsignal ausgegeben werden oder, wenn dies gewünscht sein sollte, auch die Vermahlung des Schüttgutes unterbrochen werden, bis die Partikelgrößenanalysevorrichtung gereinigt worden ist.

Ferner weist die Inline-Partikelgrößenanalysevorrichtung in einer bevorzugten Ausführungsform eine Reinigungsvorrichtung auf zur Reinigung der Partikelmessvorrichtung, insbesondere des Strahlungsdetektors und/oder der Strahlungsquelle, von Verschmutzungen.

Schließlich ist in einer bevorzugten Fortbildung der Inline-Partikelgrößenanalysevorrichtung vorgesehen, dass die Reinigungsvorrichtung ein Gebläse, insbesondere ein Luftgebläse, zur Reinigung der Partikelmessvorrichtung, insbesondere des Strahlungsdetektors und/oder der Strahlungsquelle, aufweist oder ist.

In einem zweiten Aspekt der Erfindung wird die eingangs genannte Aufgabe gemäß Anspruch 16 durch eine Mühle zum Vermahlen von zu vermahlenden Schüttgut gelöst. Die Mühle ist insbesondere eine Hammermühle.

Die Mühle gemäß diesem Aspekt weist auf: Eine von einem Mahlkammergehäuse umschlossene Mahlkammer mit einer innerhalb der Mahlkammer mit einer Mahlantriebseinheit drehbar antreibbar angeordneten Mahlvorrichtung zum Vermahlen von zu vermahlenden Schüttgut, einen Schüttguteinlass zur Zuführung von zu vermahlenden Schüttgut in die Mahlkammer und einen Schüttgutauslass zum Abführen von mit der Mahlvorrichtung vermahlten Schüttgut aus der Mahlkammer, und eine stromabwärts des Schüttgutauslasses angeordnete Inline-Partikelgrößenanalysevorrichtung, wie diese zuvor gemäß dem ersten Aspekt und/oder möglichen bevorzugten Ausführungsformen davon beschrieben wurde, zur kontinuierlichen Messung von Partikelgrößen einer kontinuierlich gesammelten Messprobe des von der Mahlvorrichtung vermahlenen Schüttgutes, wobei die Hauptleitung über die Hauptleitung-Einlassöffnung mit dem Schüttgutauslass strömungstechnisch gekoppelt ist.

Zu den Vorteilen, Ausführungsvarianten und Ausführungsdetails dieses Aspektes der Erfindung und ihrer Fortbildungen wird auch auf die vorangegangene Beschreibung zu den entsprechenden Merkmalen der Inline-Partikelgrößenanalysevorrichtung und die nachfolgende Beschreibung zu den entsprechenden Merkmalen des Verfahrens, des Computerprogrammprodukts und des nicht-transitorischen computerlesbaren Speichermedium verwiesen.

In einer bevorzugten Ausführungsform weist die Mühle eine Siebeinheit auf, die an dem Schüttgutauslass zum Sieben des vermahlten Schüttguts angeordnet ist.

Weiterhin ist gemäß einer bevorzugten Fortbildung der Mühle vorgesehen, dass sich ausgehend von dem Schüttgutauslass eine Auslasseinheit mit einem Auslasskanal erstreckt, wobei die Auslasseinheit vorzugsweise als Auslassrohr oder Auslassleitung ausgebildet ist, und die Inline-Partikelgrößenanalysevorrichtung parallel zu dem Auslasskanal einen Bypass-Kanal ausbildet, wobei die Auslasseinheit eine Auslassöffnung und stromabwärts von der Auslassöffnung eine Einlassöffnung aufweist und die Inline-Partikelgrößenanalysevorrichtung mit der Auslasseinheit eingangsseitig über die Messprobeneinlassvorrichtung und die Auslassöffnung und ausgangsseitig über die Messprobenauslassvorrichtung und die Einlassöffnung strömungstechnisch verbunden ist.

Ferner weist die Mühle nach einer bevorzugten Fortbildung eine Steuerungsvorrichtung auf, die signaltechnisch mit der Partikelmessvorrichtung und der Mahlantriebseinheit verbunden ist, wobei die Steuerungsvorrichtung ausgebildet ist, die Mahlantriebseinheit in Abhängigkeit von Messergebnissen der kontinuierlichen Messung durch die Partikelmessvorrichtung anzusteuern und/oder die Höhe eines Luftvolumenstroms, der durch die Mühle strömt, und/oder die Zuführmenge des zu vermahlenden Schüttgutes zu steuern.

In einem dritten Aspekt der Erfindung wird die eingangs genannte Aufgabe gemäß Anspruch 19 durch ein Verfahren zur Steuerung einer Mühle, insbesondere einer Hammermühle, zum Vermahlen von zu vermahlenden Schüttgut in Abhängigkeit von Messergebnissen einer Inline-Partikelgrößenanalysevorrichtung, insbesondere gemäß dem zuvor beschriebenen ersten Aspekt oder gemäß einer möglichen bevorzugten Ausführungsform dieses ersten Aspekts, gelöst. Das Verfahren weist folgende Schritte auf:
- Erfassen eines IST-Kornspektrums einer Messprobe mittels einer Partikelmessvorrichtung,
- Analyse des erfassten IST-Kornspektrums,
- Festlegen eines SOLL-Kornspektrums,
- Abgleich des erfassten IST-Kornspektrums mit dem festgelegten SOLL-Kornspektrums, und
- Einstellen eines oder mehrerer der folgenden Mühlenparameter in Abhängigkeit des Ergebnisses des Abgleichs des erfassten IST-Kornspektrums mit dem festgelegten SOLL-Kornspektrums:
   o Drehzahl eines Rotors der Mühle, welcher mehrere Hammermühlenschläger der Mühle antreibt;
   ∘ Höhe eines Luftvolumenstroms, der durch die Mühle strömt, und
   ∘ Zuführmenge des zu vermahlenden Schüttgutes.

Zu den Vorteilen, Ausführungsvarianten und Ausführungsdetails dieses Aspektes der Erfindung und ihrer Fortbildungen wird auch auf die vorangegangene Beschreibung zu den entsprechenden Merkmalen der Inline-Partikelgrößenanalysevorrichtung sowie der Mühle und die nachfolgende Beschreibung zu den entsprechenden Merkmalen des Computerprogrammprodukts und des nicht-transitorischen computerlesbaren Speichermedium verwiesen.

Gemäß einem vierten Aspekt der Erfindung wird die eingangs genannte Aufgabe gemäß Anspruch 20 durch ein Computerprogrammprodukt gelöst, das Programmcode enthält, um bei Ausführung durch die Prozessorschaltung das zuvor beschriebene Verfahren gemäß dem dritten Aspekt auszuführen.

Zu den Vorteilen, Ausführungsvarianten und Ausführungsdetails dieses Aspektes der Erfindung und ihrer Fortbildungen wird auch auf die vorangegangene Beschreibung zu den entsprechenden Merkmalen der Inline-Partikelgrößenanalysevorrichtung, der Mühle sowie des Verfahren und die nachfolgende Beschreibung zu den entsprechenden Merkmalen des nicht-transitorischen computerlesbaren Speichermedium verwiesen.

Nach einem fünften Aspekt der Erfindung wird die eingangs genannte Aufgabe nach Anspruch 21 durch ein nicht-transitorisches computerlesbares Speichermedium gelöst, das Anweisungen enthält, die, wenn sie von einer Prozessorschaltung ausgeführt werden, die Prozessorschaltung veranlassen, das zuvor beschriebene Verfahren gemäß dem dritten Aspekt auszuführen.

Zu den Vorteilen, Ausführungsvarianten und Ausführungsdetails dieses Aspektes der Erfindung und ihrer Fortbildungen wird auch auf die vorangegangene Beschreibung zu den entsprechenden Merkmalen der Inline-Partikelgrößenanalysevorrichtung, der Mühle, des Verfahrens und des Computerprogrammprodukts verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine schematische Seitenansicht in der Schnittdarstellung einer Mühle gemäß einer bevorzugten Ausführungsform;
- Fig. 2: eine schematische Seitenansicht in der Schnittdarstellung einer Inline-Partikelgrößenanalysevorrichtung gemäß einer bevorzugten Ausführungsform der in Figur 1 gezeigten Mühle;
- Fig. 3: eine schematische dreidimensionale Schnittansicht eines Ausschnitts der in Figur 2 gezeigten Ausführungsform;
- Fig. 4: eine schematische Darstellung einer bevorzugten Ausführungsform einer Partikelmessvorrichtung der in den Figuren 2 und 3 dargestellten Inline-Partikelgrößenanalysevorrichtung; und
- Fig. 5: ein schematisches Blockdiagramm einer bevorzugten Ausführungsform eines Verfahrens zur Steuerung einer Mühle.

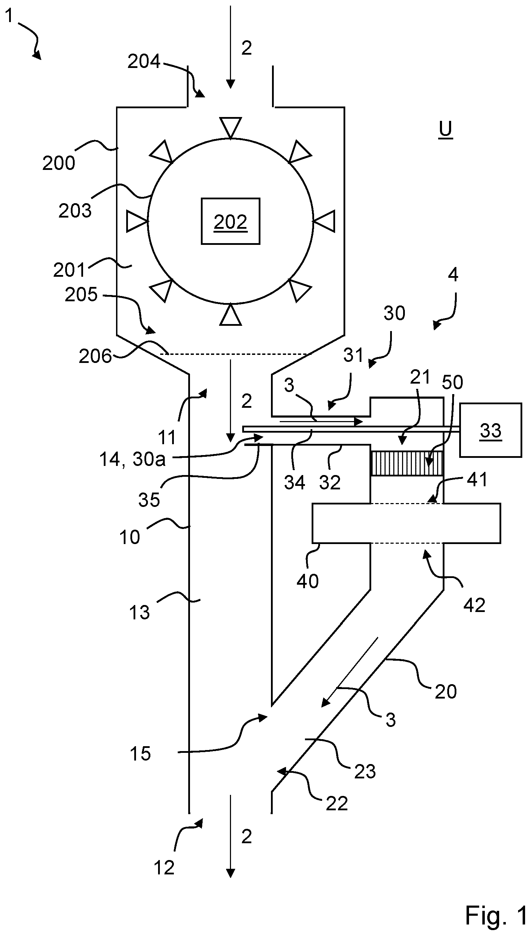

Figur 1 zeigt eine schematische Seitenansicht in der Schnittdarstellung einer Mühle 1 gemäß einer bevorzugten Ausführungsform. Die Mühle 1 ist in dieser bevorzugten Ausführungsform als Hammermühle ausgebildet und zum Vermahlen von Schüttgut 2 vorgesehen.

Die Mühle 1 weist ein Mahlkammergehäuse 200 auf, welches eine Mahlkammer 201 umschließt. Das zu vermahlende Schüttgut 2 wird der Mahlkammer 201 über einen Schüttguteinlass 204 zugeführt und das vermahlene Schüttgut 2 wird über einen Schüttgutauslass 205 aus der Mühlkammer hinausgeführt. Entsprechend weist das Mahlkammergehäuse 200 den Schüttguteinlass 204 und den Schüttgutauslass 205 auf. Der Schüttguteinlass 204 ist beispielsweise mit einem Speicher (nicht dargestellt) verbunden, in dem das zu vermahlende und bereits dosierte Schüttgut (zwischen)gespeichert wird. An dem Schüttgutauslass 205 ist eine als Rohr ausgebildete Hauptleitung 10 über eine Hauptleitung-Einlassöffnung 11 angeordnet, die sich ausgehend von dem Schüttgutauslass 205 zwischen der Hauptleitung-Einlassöffnung 11 und der Hauptleitung-Auslassöffnung 12 mit einem Hauptleitungskanal 13 erstreckt. Über die Hauptleitung 10 kann das vermahlene Schüttgut 2 abtransportiert werden, beispielsweise zu einem Speicher zum Speichern des vermahlenen Schüttguts. Ebenso kann der Abtransport des vermahlenen Schüttgutes beispielsweise zu einer Pelletpresse oder zu einem Extruder oder zum Trocknen abtransportiert werden.

In der vorliegenden Ausführungsform ist vorgesehen, dass im Betrieb der Mühle der Schüttguteinlass 204 etwa auf einer 12-Uhr-Position und der Schüttgutauslass 205 etwa auf einer 6-Uhr-Position vorgesehen sind. Dies hat den Vorteil, dass das zu vermahlende Schüttgut das Mahlkammergehäuse in Wirkrichtung der Schwerkraft durchläuft.

Zum Vermahlen des Schüttguts 2 ist innerhalb der Mahlkammer 201 eine Mahlvorrichtung 203 vorgesehen. Die Mahlvorrichtung 203 ist innerhalb der Mahlkammer 201 um eine Drehachse drehbar mit einer Mahlantriebseinheit 202 antreibbar angeordnet. Zum Vermahlen des Schüttguts weist die Mahlvorrichtung mehrere Schläger auf, die umlaufend im Zusammenspiel mit dem Mahlkammergehäuse 200 das Schüttgut 2 vermahlen. Eine Siebeinheit 205, welche an dem Schüttgutauslass 205 angeordnet ist, siebt das vermahlene Schüttgut und verhindert hierdurch ein Verklumpen des vermahlenen Schüttguts bzw. löst mögliche Verklumpungen des vermahlenen Schüttguts auf.

In der vorliegenden Ausführungsform der Mühle 1 ist eine Inline-Partikelgrößenanalysevorrichtung 4 zur kontinuierlichen Messung von Partikelgrößen einer kontinuierlich entnommenen Messprobe 3 des von der Mahlvorrichtung 203 vermahlenen Schüttgutes 2 vorgesehen. Hierzu ist die Inline-Partikelgrößenanalysevorrichtung 4 mit dem Mühlkammergehäuse 200 über die Hauptleitung 10 strömungstechnisch verbunden und weist neben der Hauptleitung 10 eine Nebenleitung 20 auf. Die Nebenleitung 20 ist mit der Hauptleitung 10 strömungstechnisch verbunden. Hierzu weist die Hauptleitung 10 eine Bypass-Auslassöffnung 14 auf und die Nebenleitung 20 eine Nebenleitung-Einlassöffnung 21, die strömungstechnisch miteinander verbunden sind.

Zur kontinuierlichen Entnahme der Messprobe weist die Inline-Partikelgrößenanalysevorrichtung 4 eine Messprobenentnahmeeinheit 30 auf. Die Messprobenentnahmeeinheit 30 ist derart angeordnet und ausgebildet, um kontinuierlich die Messprobe 3 des in dem Hauptleitungskanal 13 transportierten Schüttgutes 2 zu entnehmen und dem Nebenleitungskanal 23 über die Nebenleitung-Einlassöffnung 21 kontinuierlich bereitzustellen. Für die kontinuierliche Entnahme der Messprobe und zum kontinuierlichen Transport der Messprobe aus dem Hauptleitungskanal 13 in den Nebenleitungskanal 23 weist die Messprobenentnahmeeinheit 30 eine Fördervorrichtung 31 auf, die eine in einem Förderkanal 32 von einer Förderantriebseinheit 33 drehbar antreibbar angeordnete Förderschnecke 34 umfasst. Die Förderschnecke 34 ist mit einer Förderantriebseinheit 33 mechanisch gekoppelt, welche die Förderschnecke 34 zur kontinuierlichen Entnahme und zum kontinuierlichen Transport der Messprobe aus dem Hauptleitungskanal 13 über die Nebenleitung-Einlassöffnung 21 in den Nebenleitungskanal 23 antreibt. Durch die Rotation der Förderschnecke wird die kontinuierlich gesammelte Messprobe kontinuierlich der Hauptleitung entnommen und kontinuierlich der Nebenleitung zugeführt.

Es ist vorliegend vorgesehen, dass die Messprobenentnahmeeinheit 30 einen verstellbaren Messprobenentnahmeeinlass 30a aufweist, dessen Einlassöffnungsgröße zwischen einer ersten Einlassöffnungsgröße und einer von der ersten Einlassöffnungsgröße verschiedenen zweiten Einlassöffnungsgröße einstellbar ist, wobei die zweite Einlassöffnungsgröße größer ist als die erste Einlassöffnungsgröße. Hierbei ist vorgesehen, dass der Messprobenentnahmeeinlass 30a zu der Bypass-Auslassöffnung 14 korrespondiert. In dem vorliegenden Ausführungsbeispiel ist die Einlassöffnungsgröße derart zwischen der ersten und zweiten Einlassöffnungsgröße gewählt, dass der Füllgrad des Förderkanals durch die Förderschnecke bei 30% liegt.

In der dargestellten bevorzugten Ausführungsform wird dies erreicht, in dem die Fördervorrichtung 31 einen verstellbarer Förderschneckenboden 35 aufweist, der entlang der Förderschnecke, d.h. in und entgegen der Förderrichtung der Förderschnecke einer ersten Förderschneckenbodenposition und einer von der ersten Förderschneckenbodenposition verschiedenen zweiten Förderschneckenbodenposition verschiebbar ist.

Hierbei ist vorgesehen, dass der in der ersten Förderschneckenbodenposition angeordnete Förderschneckenboden dem Messprobenentnahmeeinlass mit der ersten Einlassöffnungsgröße entspricht, und der in der zweiten Förderschneckenbodenposition angeordnete Förderschneckenboden dem Messprobenentnahmeeinlass mit der zweiten Einlassöffnungsgröße entspricht.

In dem Nebenleitungskanal 23 ist stromabwärts der Nebenleitung-Einlassöffnung 21 eine Partikelmessvorrichtung 40 bereitgestellt. Die Partikelmessvorrichtung 40 ist zur kontinuierlichen Messung von Partikelgrößen der in der Hauptleitung entnommenen Messprobe 3 und in der Nebenleitung 20 bereitgestellten Messprobe ausgebildet. Hierzu weist die Partikelmessvorrichtung 40 einen Messprobeneinlass 41 auf, durch welchen die Messprobe 3 der Partikelmessvorrichtung 40 kontinuierlich zugeführt werden kann. Ferner weist die Partikelmessvorrichtung 40 stromabwärtsseitig einen Messprobenauslass 42 auf, der mit dem Messprobeneinlass 41 strömungstechnisch verbunden ist. Über den Messprobenauslass 42 kann die von der Partikelmessvorrichtung 40 erfasste Messprobe 3 die Partikelmessvorrichtung 40 in Richtung der Nebenleitung-Auslassöffnung 22 verlassen.

Vorliegend ist vorgesehen, dass die Nebenleitung-Auslassöffnung 22 der Nebenleitung mit der Hauptleitung 10 strömungstechnisch verbunden ist. Hierzu weist die Hauptleitung 10 stromabwärts der Bypass-Auslassöffnung 14 eine Bypass-Einlassöffnung 15 auf, an die die Nebenleitung-Auslassöffnung 22 der Nebenleitung gekoppelt ist. Somit ist die Nebenleitung 20 in dieser bevorzugten Ausführungsform sowohl einlassseitig, über die die Nebenleitung-Einlassöffnung 21, als auch auslassseitig, über die Nebenleitung-Auslassöffnung 22, mit der Hauptleitung strömungstechnisch verbunden. Hierdurch wird also die der Hauptleitung 10 entnommene Messprobe 3, welche der Nebenleitung 20 einlassseitig zugeführt wird, auslassseitig der Hauptleitung über die Nebenleitung-Auslassöffnung 22 und die Bypass-Einlassöffnung 15 der Hauptleitung 10 wieder zugeführt.

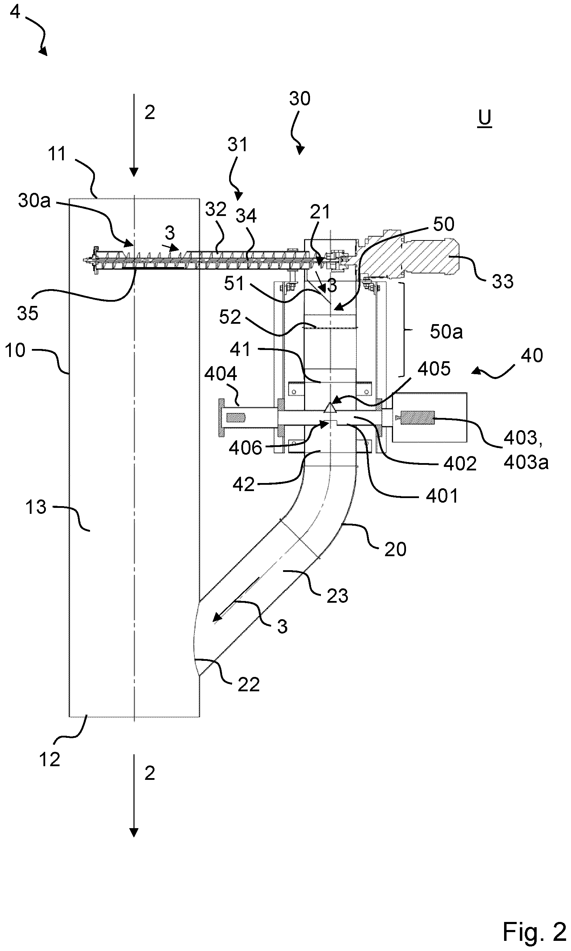

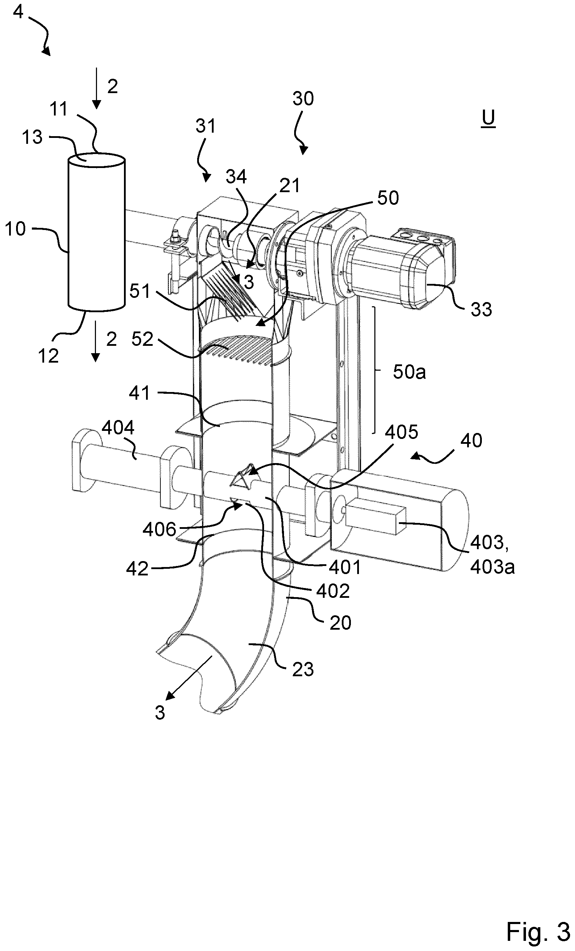

Zur Aufbereitung der von der Hauptleitung entnommenen Messprobe weist die Nebenleitung eine Messprobenaufbereitungsstrecke 50a auf. Die Messprobenaufbereitungsstrecke 50a erstreckt sich innerhalb des Nebenleitungskanals 23 stromabwärts der Nebenleitung-Einlassöffnung 21 und stromaufwärts des Messprobeneinlasses 41. Die Messprobenaufbereitungsstrecke 50a erstreckt sich also zwischen der Nebenleitung-Einlassöffnung 21 und dem Messprobeneinlass 41. Die Messprobenaufbereitungsstrecke 50a dient dazu, die entnommene und der Nebenleitung zugeführte Messprobe für die Messung und Analyse mit der Partikelmessvorrichtung 40 vorzubereiten. Hierzu weist die Messprobenaufbereitungsstrecke 50a eine Messprobenaufbereitungseinheit 50 auf, welche Partikel der Messprobe in der Nebenleitung gleichmäßig verteilt sowie mögliche Verklumpungen der Messprobe auflöst. Diese Funktion wird durch ein Messprobenverteilblech 51, das die die über die Nebenleitung-Einlassöffnung 21 zugeführte Messprobe 3 in der Messprobenaufbereitungsstrecke 50a verteilt und einen Messprobenverteilerrost 52, das die über die Nebenleitung-Einlassöffnung 21 zugeführte Messprobe 3 in der Messprobenaufbereitungsstrecke 50a verteilt, erreicht. Die Figuren 2 und 3 zeigen die Anordnung des Messprobenverteilblechs 51 und des Messprobenverteilerrosts 52.

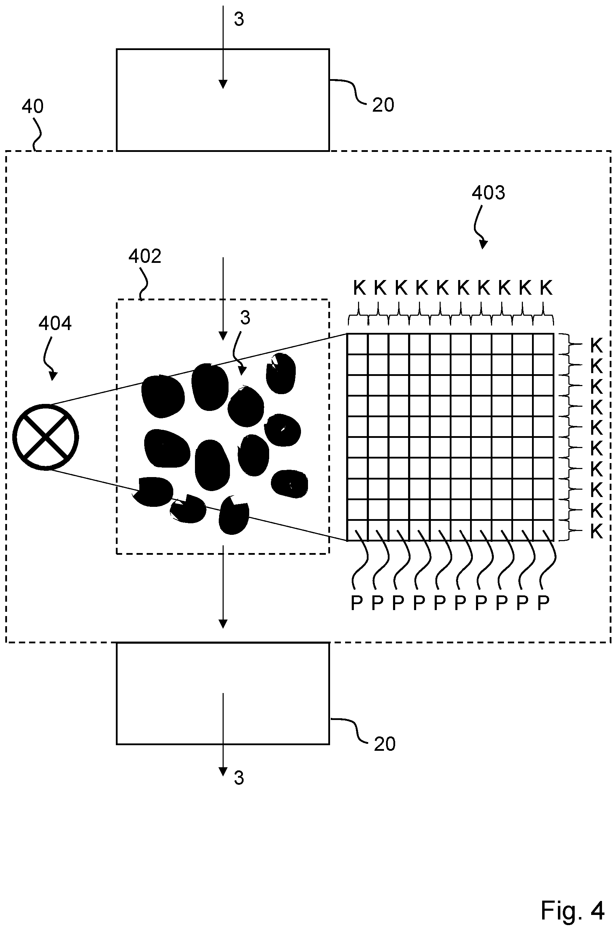

Aus den Figuren 2 bis 4 geht die spezifische Ausgestaltung der Partikelmessvorrichtung 40 hervor. So zeigt Figur 2 eine schematische Seitenansicht in der Schnittdarstellung der Inline-Partikelgrößenanalysevorrichtung 4 gemäß einer bevorzugten Ausführungsform der in Figur 1 gezeigten Mühle. Figur 3 zeigt eine schematische dreidimensionale Schnittansicht eines Ausschnitts der in Figur 2 gezeigten Ausführungsform; und Figur 4 ist eine schematische Darstellung einer bevorzugten Ausführungsform einer Partikelmessvorrichtung 40 der in den Figuren 2 und 3 dargestellten Inline-Partikelgrößenanalysevorrichtung 4.

Die in diesen Figuren dargestellte Partikelmessvorrichtung 40 weist ein Messkammergehäuse 401, welches eine Messkammer umschließt, so dass diese gegenüber der Umgebung U der Inline-Partikelgrößenanalysevorrichtung 4 abgedunkelt ist. Ferner ist in dieser bevorzugten Ausführungsform des Partikelmessvorrichtung 40 ein Strahlungsdetektor 403 und eine Strahlungsquelle 404 vorgesehen. Der Strahlungsdetektor und die Strahlungsquelle sind gegenüberliegend zueinander angeordnet, so dass der Nebenleitungskanal bzw. die Messkammer zwischen dem Strahlungsdetektor und der Strahlungsquelle angeordnet sind.

Der Strahlungsdetektor 403 ist zur Detektion elektromagnetischer Strahlung ausgebildet. Vorliegend ist der Strahlungsdetektor 403 von einer Infrarotkamera 403a umfasst. Die Infrarotkamera 403a kann bis zu 6.000 Bilder pro Sekunde erfassen. Die Strahlungsquelle 404 ist vorliegend eine LED, von der als Infrarotquelle entsprechende elektromagnetische Strahlung ausgeht. Der Strahlungsdetektor403 und die Strahlungsquelle 404 sind in Bezug zu der Messkammer derart angeordnet, so dass eine kontinuierliche Messung der Messprobe möglich ist, welche durch einen Messkammereinlass 405 kontinuierlich der Messkammer zugeführt wird und durch einen Messkammerauslass 406 kontinuierlich aus der Messkammer weggeführt wird. Strahlungsdetektor 403 und Strahlungsquelle 404 sind vorzugsweise derart angeordnet, dass die Messachse sich orthogonal zu der Strömungsrichtung der Messprobe in der Nebenleitung erstreckt.

Der Strahlungsdetektor ist matrixartig ausgebildet und weist matrixartig angeordnete Detektorpixel P auf. Dies ist schematisch in Figur 4 dargestellt. Die Detektorpixel P weisen eine Kantenlänge K von vorzugsweise 85 µm * 85 µm auf. Mit diesem Strahlungsdetektor lassen sich insbesondere Partikelgrößen von mindesten 50 µm und maximal 6.000 µm erfassen.

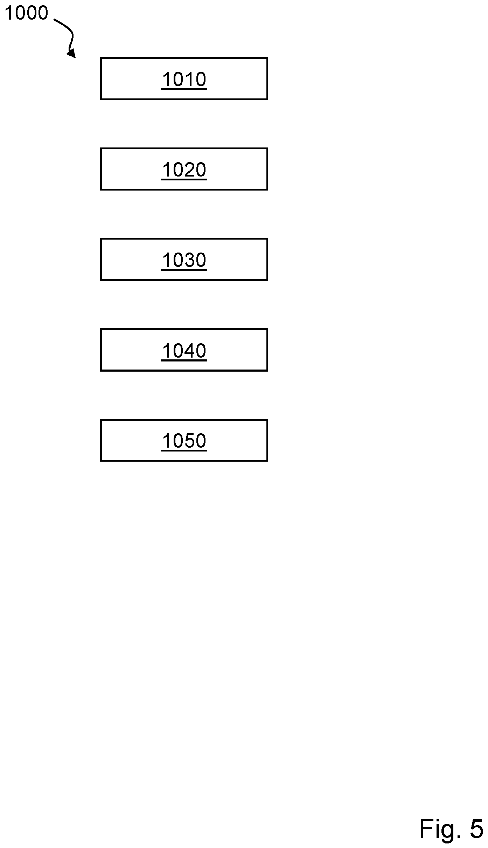

Figur 5 zeigt ein schematisches Blockdiagramm einer bevorzugten Ausführungsform eines Verfahrens 1000 zur Steuerung einer Hammermühle zum Vermahlen von zu vermahlenden Schüttgut 3 in Abhängigkeit von Messergebnissen einer Inline-Partikelgrößenanalysevorrichtung 40. Das Verfahren umfasst hierzu die folgenden Schritte:
Das Steuerungsverfahren 1000 erfordert ein Erfassen 1010 eines IST-Kornspektrums einer Messprobe mittels einer Partikelmessvorrichtung sowie dessen Analyse 1020. Ferner ist es für das Steuerungsverfahren 1000 erforderlich, ein SOLL-Kornspektrum festzulegen 1030. Als SOLL-Kornspektrum kann beispielsweise eine Untergrenze und eine Obergrenze festgelegt werden.

Das Verfahren 1000 umfasst dann ein Abgleichen 1040 des erfassten IST-Kornspektrums mit dem festgelegten SOLL-Kornspektrums.

Abhängigkeit des Ergebnisses des Abgleichs des erfassten IST-Kornspektrums mit dem festgelegten SOLL-Kornspektrums kann dann ein Einstellen 1050 eines oder mehrerer der folgenden Mühlenparameter erfolgen:
- Drehzahl eines Rotors der Mühle, welcher mehrere Hammermühlenschläger der Mühle antreibt;
- Höhe eines Luftvolumenstroms, der durch die Mühle strömt, und
- Zuführmenge des zu vermahlenden Schüttgutes.

### Bezugszeichenliste

- 1: Mühle
- 2: Schüttgut
- 3: Messprobe
- 4: Inline-Partikelgrößenanalysevorrichtung
- 20: Mahlkammergehäuse
- 101: Messprobeneinlassvorrichtung
- 102: Partikelmessvorrichtung
- 103: Messprobenauslassvorrichtung
- 104: Fördervorrichtung
- 105: Abstreifer
- 106: Schmutzdetektionseinheit
- 107: Reinigungsvorrichtung
- 201: Mahlkammer
- 202: Mahlantriebseinheit
- 203: Mahlvorrichtung
- 204: Schüttguteinlass
- 205: Schüttgutauslass
- 206: Siebeinheit
- 207: Auslasseinheit
- 207a: Auslassöffnung
- 207b: Einlassöffnung
- 208: Auslasskanal
- 401: Messkammergehäuses
- 402: Messkammer
- 403: Strahlungsdetektor
- P: Detektorpixel
- 404: Strahlungsquelle
- 405: Messkammereinlass
- 406: Messkammerauslass
- 32: Förderkanal
- 34: Förderantriebseinheit
- 34: Förderschnecke
- K: Kantenlängen von Detektorpixeln
- P: Detektorpixel
- U: Umgebung

## Patentansprüche

1. Inline-Partikelgrößenanalysevorrichtung (4) zur kontinuierlichen Messung von Partikelgrößen einer kontinuierlich entnommenen Messprobe (3) eines von einer Mühle (1) vermahlenen Schüttgutes (2), insbesondere eines von einer Mühle (1) vermahlenen freifließenden Schüttgutes (2), die Inline-Partikelgrößenanalysevorrichtung (4) aufweisend:
- eine Hauptleitung (10), welche eine Hauptleitung-Einlassöffnung (11) und eine Hauptleitung-Auslassöffnung (12) aufweist, welche zum Transport des Schüttgutes über einen Hauptleitungskanal (13) von der Hauptleitung-Einlassöffnung (11) zu der Hauptleitung-Auslassöffnung (12) strömungstechnisch verbunden sind,
- eine Nebenleitung (20), welche eine Nebenleitung-Einlassöffnung (21) und eine Nebenleitung-Auslassöffnung (22) aufweist, die zum kontinuierlichen Transport der kontinuierlich gesammelten Messprobe des Schüttgutes über einen Nebenleitungskanal (23) von der Nebenleitung-Einlassöffnung (21) und der Nebenleitung-Auslassöffnung (22) strömungstechnisch verbunden sind, wobei die Nebenleitung zur Förderung der von dem Schüttgut entnommenen Messprobe zu der Nebenleitung über die Nebenleitung-Einlassöffnung mit dem Hauptleitungskanal strömungstechnisch verbunden ist,
- eine Messprobenentnahmeeinheit (30), welche ausgebildet ist, kontinuierlich eine Messprobe (3) des in dem Hauptleitungskanal (13) transportierten Schüttgutes (2) zu entnehmen und dem Nebenleitungskanal (23) über die Nebenleitung-Einlassöffnung (21) kontinuierlich bereitzustellen,
- eine in dem Nebenleitungskanal (23) bereitgestellte Partikelmessvorrichtung (40), welche zur kontinuierlichen Messung von Partikelgrößen der entnommenen Messprobe (3) ausgebildet ist, mit einem Messprobeneinlass (41), durch welchen die Messprobe (3) der Partikelmessvorrichtung (40) kontinuierlich zugeführt werden kann, und mit einem stromabwärts der Partikelmessvorrichtung (40) angeordneten und mit der Partikelmessvorrichtung (40) strömungstechnisch verbundenen Messprobenauslass (42), durch welche die von der Partikelmessvorrichtung (40) erfasste Messprobe (3) im Nebenleitungskanal (23) die Partikelmessvorrichtung (40) in Richtung der Nebenleitung-Auslassöffnung (22) verlassen kann,
- wobei die Messprobenentnahmeeinheit (30) einen verstellbaren Messprobenentnahmeeinlass (30a) aufweist, dessen Einlassöffnungsgröße zwischen einer ersten Einlassöffnungsgröße und einer von der ersten Einlassöffnungsgröße verschiedenen zweiten Einlassöffnungsgröße einstellbar ist, wobei die zweite Einlassöffnungsgröße größer ist als die erste Einlassöffnungsgröße.

2. Inline-Partikelgrößenanalysevorrichtung (4) gemäß Anspruch 1, die Partikelmessvorrichtung (40) aufweisend:
- eine innerhalb eines Messkammergehäuses (401) ausgebildete Messkammer (402), die gegenüber der Umgebung (U) der Inline-Partikelgrößenanalysevorrichtung (4) abgedunkelt ist,
- einen Strahlungsdetektor (403), der zur Detektion elektromagnetischer Strahlung ausgebildet ist und insbesondere eine Kamera (403a), besonders bevorzugt eine Infrarotkamera, die den Strahlungsdetektor umfasst, und
- eine Strahlungsquelle (404) für elektromagnetische Strahlung, wobei die Strahlungsquelle (404) insbesondere eine Infrarotquelle ist und/oder als LED ausgebildet ist,
- wobei der Strahlungsdetektor (403) und die Lichtquelle (404) in Bezug zur Messkammer (402) zur kontinuierlichen Messung der Messprobe (3) angeordnet sind, wobei der Strahlungsdetektor (403) und die Lichtquelle (404) vorzugsweise gegenüberliegend angeordnet sind.

3. Inline-Partikelgrößenanalysevorrichtung (4) nach einem der vorhergehenden Ansprüche 1 oder 2, wobei
- der Strahlungsdetektor (403) ein optischer Matrix-Sensor mit einer Auswerteeinheit ist oder diese umfasst; und/oder
- die Strahlungsquelle (404) eine Lichtquelle ist, welche zur Ausstrahlung eines gleichförmigen Lichts ausgebildet ist, und/oder wobei die Kamera (403a) den Strahlungsdetektor (403) umfasst und die Kamera mindestens 24 Bilder pro Sekunde, vorzugsweise mindestens 360 Bilder pro Sekunde, besonders bevorzugt mindestens 6.000 Bilder pro Sekunde, aufnimmt und/oder maximal bis zu 6.000 Bilder pro Sekunde, vorzugsweise maximal bis zu 10.000 Bilder pro Sekunde, besonders bevorzugt maximal bis zu 20.000 oder 25.000 Bilder pro Sekunde, aufnimmt.

4. Inline-Partikelgrößenanalysevorrichtung (4) nach einem der vorhergehenden Ansprüche 1 bis 3,
- wobei die Partikelmessvorrichtung (40) zur Messung von Partikelgrößen
- von mindestens 50 µm, vorzugsweise von mindestens 85 µm, besonders bevorzugt von mindestens 160 µm, ausgebildet ist und/oder
- von maximal 20.000 µm, vorzugsweise von maximal 10.000 µm, besonders bevorzugt von maximal 6.000 µm, ausgebildet ist, und/oder
- wobei der Strahlungsdetektor (403) matrixartig angeordnete Detektorpixel (P) aufweist, wobei die Detektorpixel (P) Kantenlängen (K)
- von mindestens 50 µm * 50 µm, vorzugsweise von mindestens 85 µm * 85 µm, besonders bevorzugt von mindestens 160 µm * 160 µm, aufweisen, und/oder
- von maximal 20.000 µm * 20.000 µm, vorzugsweise von maximal 10.000 µm * 10.000 µm, besonders bevorzugt von maximal 6.000 µm * 6.000 µm, aufweisen, und/oder
- wobei die Messprobenentnahmeeinheit (30) eine Fördervorrichtung (31) aufweist, die sich von dem Hauptleitungskanal und zu dem Nebenleitungskanal zur kontinuierlichen Förderung der Messprobe zu dem Nebenkanal erstreckt.

5. Inline-Partikelgrößenanalysevorrichtung (4) nach dem vorhergehenden Anspruch 4, wobei die Fördervorrichtung (31) einen Förderkanal aufweist, der sich zwischen der Einlassöffnung der Messprobenentnahmeeinheit und einer Abwurföffnung erstreckt, wobei die Fördervorrichtung (31)
- eine in dem Förderkanal (32) von einer Förderantriebseinheit (33) drehbar antreibbar angeordnete Förderschnecke (34) aufweist, wobei
∘ die Förderschnecke vorzugsweise aus Kunststoff besteht oder Kunststoff umfasst, und/oder
oder Förderkanal vorzugsweise aus Stahl gebildet wird; und/oder
- einen verstellbaren Förderschneckenboden zur Aufnahme der Messprobe und Zuführung der Messprobe zu der Messprobenentnahmeeinheit aufweist, der zwischen einer ersten Förderschneckenbodenposition und einer von der ersten Förderschneckenbodenposition verschiedenen zweiten Förderschneckenbodenposition einstellbar ist, so dass der Messprobenentnahmeeinlass der ersten Einlassöffnungsgröße entspricht, wenn der Förderschneckenboden in der ersten Förderschneckenbodenposition angeordnet ist und der zweiten Einlassöffnungsgröße entspricht, wenn der Förderschneckenboden in der zweiten Förderschneckenbodenposition angeordnet ist; und/oder
- die Abwurföffnung als Schlitz ausgebildet ist, wobei die schlitzförmig ausgebildete Abwurföffnung insbesondere dazu ausgebildet ist, die Messprobe gleichmäßig über einen Öffnungsquerschnitt des Nebenleitungskanals zu verteilen.

6. Inline-Partikelgrößenanalysevorrichtung (4) nach einem der vorhergehenden Ansprüche 1 bis 5, aufweisend eine Messprobenaufbereitungsstrecke (50a), welche sich zwischen der Nebenleitung-Einlassöffnung (21) und dem Messprobeneinlass (41) der Partikelmessvorrichtung (40) erstreckt, wobei die Messprobenaufbereitungsstrecke (50a) eine Messprobenaufbereitungseinheit (50) und/oder eine Luftreinigungseinheit aufweist.

7. Inline-Partikelgrößenanalysevorrichtung (4) nach einem der vorhergehenden Ansprüche 1 bis 6, die Messprobenaufbereitungseinheit (50) aufweisend:
- eine Messprobenverteilerplatte (51), welche die über die Nebenleitung-Einlassöffnung (21) zugeführte Messprobe (3) in der Messprobenaufbereitungsstrecke (50a) verteilt, wobei vorzugsweise die Messprobenverteilerplatte (51) wechselbar und/oder lösbar an der Nebenleitung (20) angeordnet ist, und/oder
- ein Messprobenverteilerrost (52), das die über die Nebenleitung-Einlassöffnung (21) zugeführte Messprobe (3) in der Messprobenaufbereitungsstrecke (50a) verteilt, wobei der Messprobenverteilerrost (52) vorzugsweise mehrere, insbesondere mehr als zwei, äquidistant zueinander beabstandet angeordnete Verteilerstäbe aufweist, wobei die Verteilerstäbe vorzugsweise als Rundstahl ausgebildet sind; und/oder
∘ vorzugsweise die Verteilerstäbe einen Durchmesser von mindestens 5 mm, insbesondere von mindestens 6 mm, besonders bevorzugt von mindestens 10 mm, aufweisen; und/oder
∘ vorzugsweise die Verteilerstäbe eine Länge von mindestens 100 mm, besonders bevorzugt von mindestens 120 mm, und maximal von 250 mm, besonders bevorzugt von maximal 205 mm, aufweisen; und/oder
∘ vorzugsweise die Verteilerstäbe an oder mit einer Wand der Nebenleitung 20 stoffschlüssig verbunden, insbesondere verschweißt, sind, und/oder
- eine Düseneinheit, wobei die Düseneinheit vorzugsweise an der Nebenleitung stromaufwärts des Messprobenverteilerrosts (52) und/oder der Messprobenverteilerplatte (51) angeordnet ist.

8. Inline-Partikelgrößenanalysevorrichtung (4) nach einem der vorhergehenden Ansprüche 1 bis 7,
- wobei die Partikelmessvorrichtung (40) einen Messkammereinlass (405) aufweist, durch den die Messprobe der Messkammer (402) kontinuierlich zugeführt werden kann, und einen Messkammerauslass (406) aufweist, durch den die Messprobe die Messkammer (402) kontinuierlich verlassen kann, und/oder
- wobei die Partikelmessvorrichtung (40) ausgebildet ist, eine Messung der zugeführten Messprobe durchzuführen, wenn die Menge der Messprobe (3) eine Grenzmenge überschreitet.

9. Inline-Partikelgrößenanalysevorrichtung (4) nach einem der vorhergehenden Ansprüche 1 bis 8, aufweisend
- eine Schmutzdetektionseinheit (106) zur Detektion von Verschmutzung in der Partikelmessvorrichtung (40), insbesondere an dem Strahlungsdetektor (403) und/oder der Strahlungsquelle (404), wobei besonders bevorzugt der Strahlungsdetektor (403) die Schmutzdetektionseinheit (106) ausbildet oder ist, und/oder
- eine Reinigungsvorrichtung zur Reinigung der Partikelmessvorrichtung (40), insbesondere des Strahlungsdetektors (403) und/oder der Strahlungsquelle (404), von Verschmutzungen,
wobei vorzugsweise die Reinigungsvorrichtung ein Gebläse, insbesondere ein Luftgebläse, zur Reinigung der Partikelmessvorrichtung (40), insbesondere des Strahlungsdetektors (403) und/oder der Strahlungsquelle (404), aufweist oder ist.

10. Mühle (1), insbesondere Hammermühle, zum Vermahlen von zu vermahlenden Schüttgut (2), aufweisend:
- eine von einem Mahlkammergehäuse (200) umschlossene Mahlkammer (201) mit einer innerhalb der Mahlkammer (201) mit einer Mahlantriebseinheit (202) drehbar antreibbar angeordneten Mahlvorrichtung (203) zum Vermahlen von zu vermahlenden Schüttgut (3),
- einen Schüttguteinlass (204) zur Zuführung von zu vermahlenden Schüttgut (3) in die Mahlkammer (201) und einen Schüttgutauslass (205) zum Abführen von mit der Mahlvorrichtung (203) vermahlten Schüttgut (2) aus der Mahlkammer (201), und
- eine stromabwärts des Schüttgutauslasses (205) angeordnete Inline-Partikelgrößenanalysevorrichtung (4) nach einem der vorhergehenden Ansprüche 1 bis 15 zur kontinuierlichen Messung von Partikelgrößen einer kontinuierlich gesammelten Messprobe des von der Mahlvorrichtung vermahlenen Schüttgutes (2), wobei die Hauptleitung (10) über die Hauptleitung-Einlassöffnung (11) mit dem Schüttgutauslass (205) strömungstechnisch gekoppelt ist.

11. Mühle (1) nach dem vorhergehenden Anspruch 10, aufweisend
- eine Siebeinheit (206), die an dem Schüttgutauslass (205) zum Sieben des vermahlten Schüttguts (2) angeordnet ist, und/oder
- eine Steuerungsvorrichtung, die signaltechnisch mit der Partikelmessvorrichtung (40) und der Mahlantriebseinheit (202) verbunden ist, wobei die Steuerungsvorrichtung ausgebildet ist, die Mahlantriebseinheit (202) in Abhängigkeit von Messergebnissen der kontinuierlichen Messung durch die Partikelmessvorrichtung (40) anzusteuern.

12. Verfahren (1000) zur Steuerung einer Mühle, insbesondere einer Hammermühle, zum Vermahlen von zu vermahlenden Schüttgut (3) in Abhängigkeit von Messergebnissen einer Inline-Partikelgrößenanalysevorrichtung (40), insbesondere in Abhängigkeit von Messergebnissen einer Inline-Partikelgrößenanalysevorrichtung (40) nach einem der vorhergehenden Ansprüche 1 bis 9, das Verfahren aufweisend die Schritte:
- Erfassen (1010) eines IST-Kornspektrums einer Messprobe mittels einer Partikelmessvorrichtung,
- Analyse (1020) des erfassten IST-Kornspektrums,
- Festlegen (1030) eines SOLL-Kornspektrums,
- Abgleich (1040) des erfassten IST-Kornspektrums mit dem festgelegten SOLL-Kornspektrums, und
- Einstellen (1050) eines oder mehrerer der folgenden Mühlenparameter in Abhängigkeit des Ergebnisses des Abgleichs des erfassten IST-Kornspektrums mit dem festgelegten SOLL-Kornspektrums:
∘ Drehzahl eines Rotors der Mühle, welcher mehrere Hammermühlenschläger der Mühle antreibt;
∘ Höhe eines Luftvolumenstroms, der durch die Mühle strömt, und
∘ Zuführmenge des zu vermahlenden Schüttgutes.

13. Computerprogrammprodukt, das Programmcode enthält, um bei Ausführung durch die Prozessorschaltung das Verfahren nach dem vorhergehenden Anspruch 12 auszuführen.

14. Nicht-transitorisches computerlesbares Speichermedium, das Anweisungen enthält, die, wenn sie von einer Prozessorschaltung ausgeführt werden, die Prozessorschaltung veranlassen, das Verfahren nach dem vorhergehenden Anspruch 12 auszuführen.
